# EUROPEAN PATENT SPECIFICATION

(11) **EP 1 992 760 B1**
(45) Date of publication and mention of the grant of the patent: **24.04.2013**
(21) Application number: 08009191.1
(22) Date of filing: 19.05.2008
(51) Int. Cl.: E04D 3/08, A01G 9/14

(54) **Greenhouse**
Gewächshaus
Serre

(30) Priority: 18.05.2007 NL 1033869
(43) Date of publication of application: 19.11.2008
(73) Proprietor: P.L.J. Bom Holding B.V., 2671 CV Naaldwijk (NL)
(72) Inventor: van der Meer, Allard, 2692 BN's-Gravenzande (NL)
(74) Representative: Louwaard, Jan-Willem Paul

(56) References cited:
- EP-A- 0 744 121
- CA-A- 1 028 470
- GB-A- 1 600 859
- NL-C2- 1 023 114
- US-A- 2 904 139
- US-A- 4 167 838

## Description

The invention relates to a greenhouse, comprising at least one row of columns and a roof supported by these columns.

Such greenhouses are known in glass horticulture. Different forces are transmitted through the columns, including compression forces in the longitudinal direction of the columns. These compression forces are for instance the consequence of the weight of the roof. At a determined compression force a column will bend outward and collapse. This phenomenon is referred to as buckling. In order to prevent the column collapsing under the load of the roof, standards are set for the buckling resistance of the columns in the design of the greenhouse. This buckling resistance depends for instance on the cross-sectional dimensions of the column.

There is a trend in glass horticulture for greenhouses to have increasingly large dimensions. The forces transmitted by the columns herein become increasingly great. As a result the set requirements for the columns in respect of the buckling resistance are also becoming higher. It is possible to fulfill these requirements by for instance increasing the cross-sectional dimensions of the columns. The increase in the cross-sectional dimensions of a column, and therefore in the size of a column, has the drawback that the light-intercepting surface area of a column increases. In addition, the costs of the column are higher. These drawbacks become an increasingly greater factor as the height of the greenhouse increases. As the length of the columns increases, the buckling resistance thereof decreases and the cross-sectional dimensions of the columns must be increased.

GB1600859 disclosed a greenhouse which serves as basis for claim 1.

The invention has for its object to alleviate these drawbacks. The invention is distinguished for this purpose by the feature that at least one connecting element is arranged at an intermediate level between a number of columns in the row and an anchoring. This measure limits the outward bending of the columns connected to the anchoring. This has the advantage that the buckling resistance standards of the columns are lower, and therefore the cross-sectional dimensions of the columns, and thereby the size of the columns, can be limited. Surprisingly, the decrease in the light-intercepting surface area of the columns and the decrease in the cost of the columns are found to be greater than the additional light-intercepting surface area and the additional cost of the connecting elements and the anchoring.

In the greenhouse according to the invention the buckling resistance of the columns is smaller in the direction of the row than transversely thereof. In the construction of known greenhouses the bending load in one direction of the cross-section of the columns is greater than in the direction transversely thereof. As a result the dimensions of the cross-section of the columns can be smaller in this transverse direction. Because the buckling resistance of the columns is smaller in this transverse direction, the columns will tend to bend outward in this direction. It is then advantageous for the connecting element to connect the columns in this transverse direction in order to minimize the cross-sectional dimensions of the columns. In an additional embodiment hereof the columns are free, at the level of the connecting element, of connecting elements in the direction transversely of the row. If the columns have sufficient buckling resistance in the direction transversely of the row of columns, it is advantageous not to arrange connecting elements in this direction at the level of the connecting element. This is because connecting elements in this direction are not necessary to fulfill the requirements in respect of the buckling resistance of the columns. This measure has the advantage that no unnecessary light-intercepting surface area is arranged in the greenhouse, and no unnecessary costs are incurred.

In an additional embodiment of the greenhouse according to the invention the columns comprise a lattice frame. In the known greenhouses the columns are generally rectangular hollow profiles with a large light-intercepting surface area. A lattice frame construction is an open construction and therefore allows passage of light, whereby the light-intercepting surface area can be further decreased. In an additional embodiment hereof the columns comprise a flat lattice frame which is disposed with the plane thereof transversely of the row. A flat lattice frame construction has a considerably greater bending stiffness in the direction of the lattice frame than in the direction transversely thereof. By connecting the columns with flat lattice frame in the transverse direction to an anchoring it becomes possible to apply such columns in a greenhouse. This has the advantage that the light-intercepting surface area of the columns is further decreased.

In a further additional embodiment of the invention the connecting element extends substantially horizontally. Because the outward bending of the columns results in a displacement in the horizontal plane, this measure has the advantage that the forces to be transmitted by the connecting element are then minimal, and the connecting elements can therefore have minimal cross-sectional dimensions.

In a further additional embodiment of the invention the connecting element has pressure rigidity. This measure has the advantage that one connecting element is sufficient to limit outward bending of a column in two directions. In an alternative embodiment hereof the connecting element is a tensile element. Tensile elements have for instance the advantage over pressure elements that tensile elements can be more slender. This measure hereby has the advantage that the light-intercepting surface area of a single connecting element is smaller. In an additional embodiment hereof a number of connecting elements are arranged in each case between two successive columns and spaced-apart anchorings. In an additional embodiment hereof the tensile elements lie substantially mutually in line. In a further additional embodiment hereof the tensile elements have a bias.

Furthermore, in the greenhouse according to the invention the anchoring comprises a first column, a second column, at least one substantially horizontal pressure element arranged at an intermediate level between the first column and the second column, at least a first tensile element arranged between the first column, close to the point of connection to the pressure element, and an end of the second column, and at least a second tensile element arranged between the second column, close to the point of connection to the pressure element, and an end of the first column. This measure has the advantage that, when for instance the distance between the outer walls is too great or the outer walls are not suitable as anchoring, a suitable anchoring can be realized in the greenhouse.

In an additional embodiment hereof the connecting element is connected to one of the first column and the second column, and the pressure element is connected close to the point of connection of the connecting element. This measure has the advantage that the bending load on the first column and second column is lower.

The present invention is defined in claims 1 and will be further elucidated herein below on the basis of an exemplary embodiment shown in the accompanying drawing. This is a non-limitative exemplary embodiment. The same or similar parts, components and elements are designated in the figures with the same reference numerals. In the drawing:
- fig. 1 shows a perspective view of a part of a greenhouse according to the invention; and
- fig. 2-4 show perspective detail views of the part of the greenhouse of figure 1.

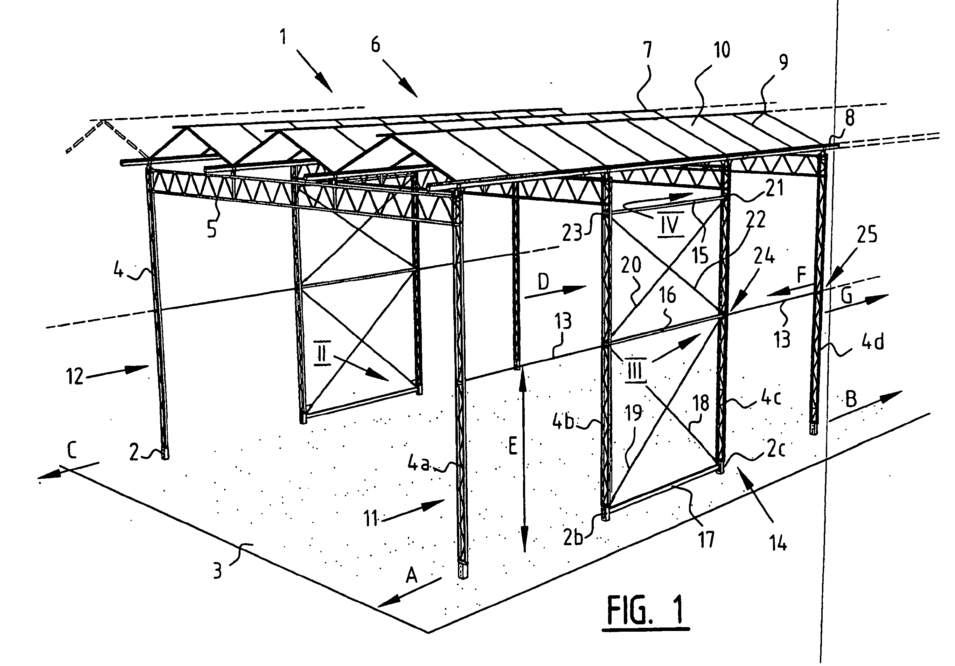

Figure 1 shows a part of a greenhouse 1. Greenhouse 1 has foundation piles 2 which are arranged in the ground 3 and on which support columns 4. Two columns 4 at a time are connected to a lattice truss 5. A roof 6 supports on columns 3 and lattice trusses 5. Roof 6 consists of a framework consisting of ridges 7, gutters 8 and bars 9, in which framework are received light-transmitting panels 10 of for instance glass.

Columns 4 are ordered in two rows 11 and 12. Only a part of greenhouse 1 is shown. Row 11 extends further in the direction of arrows A and B, row 12 in the direction of arrows C and D. Columns 4 consist of a flat lattice frame disposed with the plane thereof transversely of rows 11 and 12.

In row 11 connecting element 13 connects columns 4a and 4d to anchoring 14 at a level E lying between the ground 3 and the roof 6. In the construction shown in the figure the connecting element is arranged roughly halfway along the length of the columns. The most favorable level depends on the specific overall construction. In the shown construction no connecting elements are arranged in the lattice frame direction of the columns, since the columns have sufficient buckling resistance in this direction.

Anchoring 14 consists of first column 4b and second column 4c which are mutually connected by means of the three horizontal pressure elements 15, 16 and 17. First tensile element 18 is arranged between the first column 4b close to the point of connection to the horizontal pressure element 16 and the foundation pile 2c forming the end of second column 4c. Second tensile element 19 is arranged between second column 4c close to the point of connection to the horizontal pressure element 16 and the foundation pile 2b forming the end of second column 4b. First tensile element 20 is arranged between the first column 4b close to the point of connection to horizontal pressure element 16 and the point 21 forming the end of second column 4c. Second tensile element 22 is arranged between second column 4c close to the point of connection to the horizontal pressure element 16 and the point 23 forming the end of second pillar 4b. Pressure element 16 lies at the same level as connecting element 13. Owing to the above construction the displacement of anchoring 14 is limited at the position of the point of connection 24 to connecting element 13. As a result, if connecting element 13 has pressure rigidity, the displacement of the point of connection 25 is limited in the direction of arrow F as well as in the direction of arrow G. If connecting element 13 is a tensile element, the displacement of the point of connection 25 is then only limited in the direction of arrow G. In this case a second anchoring (not shown) can be arranged further along in row 11 in the direction of arrow B. This anchoring can be a second anchoring 14 or for instance an outer wall.

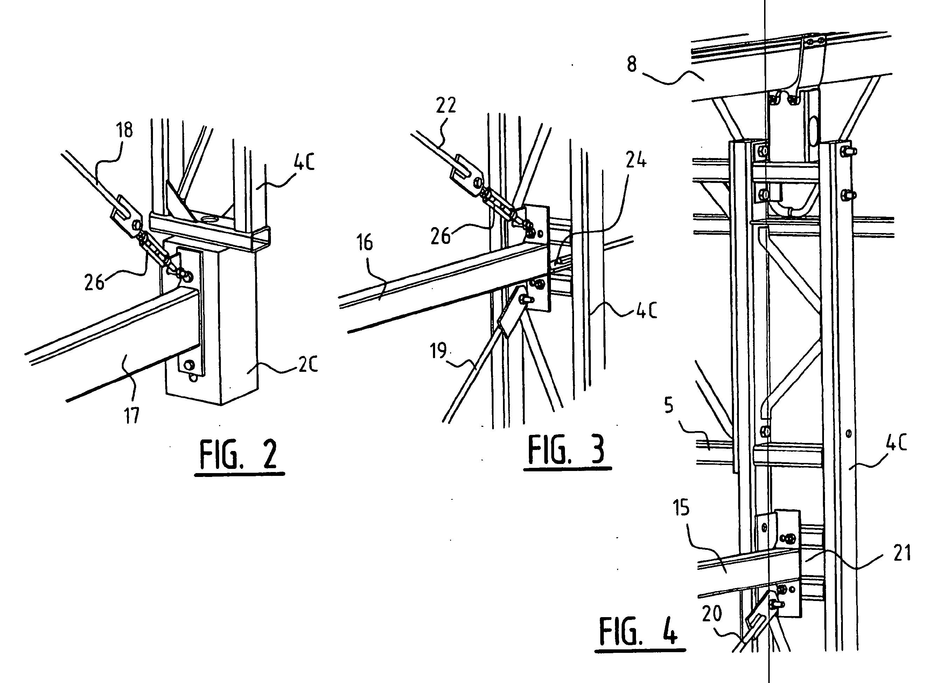

Figure 2 shows that the first tensile element 18 is connected via the horizontal pressure element 17 to foundation pile 2c forming the end of second pillar 4c. First tensile element 18 is provided with a turnbuckle 26 for the purpose of biasing first tensile element 18.

Figure 3 shows that second tensile element 19 and second tensile element 22 are connected via the horizontal pressure element 16 to second pillar 4c close to the point of connection to horizontal pressure element 16. Second tensile element 22 is provided with a turnbuckle 26 for the purpose of biasing second tensile element 18.

Figure 4 shows that first tensile element 20 is connected via the horizontal pressure element 15 to the point 21 forming the end of second pillar 4c. First tensile element 18 is provided with a turnbuckle 26 for the purpose of biasing first tensile element 20. A part of lattice truss 5 and gutter 8 is also shown.

Figure 1 shows that a single connecting element connects a column to the anchoring. More than one connecting element can also connect a column to the anchoring, for instance two adjacently of each other or two at different levels. Two connecting elements adjacently of each other have for instance the additional advantage that torsion of the column is limited.

In figure 1 the anchoring is shown with two first and two second tensile elements. Only one first tensile element and one second tensile element may also be arranged, or more than two first tensile elements and more than two second tensile elements. Additional tensile elements can also be arranged to increase the rigidity of the anchoring, for instance a tensile element connecting a point close to the end of the first pillar to a point close to the end of the second pillar, or a tensile element connecting a point close to the end of the second column to a point close to the end of the first column, or a combination of the two. The anchoring can for instance also comprise a column with bending stiffness arranged torque rigid in the ground. Another option is that the anchoring comprises a so-called portal frame (NL: "portaalspant").

In figure 1 the connecting elements are shown in line with the pressure element of the anchoring. The connecting elements can also be arranged not in line with the pressure element.

In figure 1 the connecting elements are shown at the same level as the pressure element of the anchoring. The connecting elements can also be arranged at another level.

Figures 2 and 4 show that the first tensile elements are connected below the outer end of the pillar. The first tensile elements can also be connected at another point to the end of the column, for instance above the outer end.

Figure 1 shows that the columns have the same cross-sectional dimensions along the whole length thereof. A column can for instance also taper in the direction of the foundation pile so that the forces can be more readily transmitted from the column to the foundation pile.

The columns shown in the figures consist of a lattice frame constructed from two square hollow elongate profiles connected at a mutual distance via diagonally oriented rods. The lattice frame can also be constructed in other manner. The square hollow elongate profiles can for instance be U-profiles or round hollow profiles or elongate plates. The diagonal rods can for instance also be diagonal plates.

## Claims

1. Greenhouse (1), comprising
- two rows (11, 12) of columns (4) wherein two columns at a time of each row are connected to a lattice truss (5) extending transversely of said rows (11, 12); and
- a roof (6) of light-transmitting panels (10), of for instance glass, received in a framework, which roof (6) is supported by said columns (4) and said lattice trusses (5); wherein
- the buckling resistance of the columns (4) is smaller in the direction of the rows than transversely thereof; wherein
- in each row (11, 12) at least one connecting element (13) is arranged at an intermediate level (E) between a number of columns (4) in said row and an anchoring (14); and wherein
said anchoring (14) comprises:
- a first column (4b);
- a second column (4c);
- at least one substantially horizontal pressure element (16) arranged at an intermediate level (E) between the first column (4b) and the second column (4c);
- at least a first tensile element (18) arranged between the first column (4b), close to the point of connection to the pressure element (16), and an end of the second column (4c), and
- at least a second tensile element (19) arranged between the second column (4c), close to the point of connection to the pressure element (16), and an end of the first column (4b).

2. Greenhouse as claimed in claim 1,
**characterized in that**
- at the level of the connecting element (13) the columns are free of connecting elements in the direction transversely of the row.

3. Greenhouse as claimed in claim 1 or 2,
**characterized in that**
- the columns (4) comprise a lattice frame.

4. Greenhouse as claimed in claim 3,
**characterized in that**
- the columns (4) comprise a flat lattice frame which is disposed with its plane transversely of the row (11, 12).

5. Greenhouse as claimed in any of the foregoing claims,
**characterized in that**
- the connecting element (13) extends substantially horizontally.

6. Greenhouse as claimed in any of the foregoing claims,
**characterized in that**
- the connecting element (13) has pressure rigidity.

7. Greenhouse as claimed in any of the claims 1-5,
**characterized in that**
- the connecting element (13) is a tensile element.

8. Greenhouse as claimed in claim 7,
**characterized in that**
- a number of connecting elements (13) are arranged in each case between two successive columns and spaced-apart anchorings.

9. Greenhouse as claimed in claim 8,
**characterized in that**
- the connecting elements (13) lie substantially mutually in line.

10. Greenhouse as claimed in any of the claims 7, 8 and 9,
**characterized in that**
- the connecting elements (13) have a bias.

11. Greenhouse as claimed in any of the foregoing claims,
**characterized in that**
- the connecting element (13) is connected to one of the first column (4b) and the second column (4c), and the pressure element (16) is connected close to the point of connection of the connecting element (13).

## Patentansprüche

1. Gewächshaus (1), enthaltend,
- zwei Reihen (11, 12) von Stützen (4), wobei zwei Stützen jeder Reiher jeweils mit einem Gitterbalken (5) verbunden sind, der sich quer zu den Reihen (11,12) erstreckt; und
- ein Dach (6) aus lichtdurchlässigen Platten (10) beispielsweise aus Glas, aufgenommen in ein Rahmenwerk, wobei das Dach (6) von den Stützen (4) und den Gitterbalken (5) getragen wird; wobei
- der Knickwiderstand der Stützen (4) in der Richtung der Reihen kleiner ist als quer dazu;
wobei
- in jeder Reihe (11,12) wenigstens ein Verbindungselement (13) auf einer Zwischenhöhe (E) zwischen einer Anzahl von Stützen (4) in der Reihe und einer Verankerung (14) angeordnet ist;
und wobei die Verankerung (14) enthält:
- eine erste Stütze (4b);
- eine zweite Stütze (4c);
- wenigstens ein im wesentlichen horizontales Druckelement (16), das in einer Zwischenhöhe (E) zwischen der ersten Stütze (4b) und der zweiten Stütze (4c) angeordnet ist;
- wenigstens ein erstes Zugbelastungselement (18), das zwischen der ersten Stütze (4b), nahe dem Punkt der Verbindung mit dem Druckelement (16), und einem Ende der zweiten Stütze (4c) angeordnet ist, und
- wenigstens einen zweites Zugbelastungselement (19), das zwischen der zweiten Stütze (4c), nahe dem Punkt der Verbindung mit dem Druckelement (16), und einem Ende der ersten Stütze (4b) angeordnet ist.

2. Gewächshaus nach Anspruch 1,
**dadurch gekennzeichnet**,
- auf der Höhe des Verbindungselementes (13) die Stützen frei von Verbindungselementen in der Richtung quer zu der Reihe sind.

3. Gewächshaus nach Anspruch 1 oder 2,
**dadurch gekennzeichnet,**
- **dass** die Stützen (4) einen Gitterrahmen enthalten.

4. Gewächshaus nach Anspruch 3,
**dadurch gekennzeichnet,**
- **dass** die Stützen (4) einen flachen Gitterrahmen enthalten, der mit seiner Ebene quer zu der Reihe (11,12) angeordnet ist.

5. Gewächshaus nach jedem der vorhergehenden Ansprüche,
**dadurch gekennzeichnet,**
- **dass** das Verbindungselement (13) sich im wesentlichen horizontal erstreckt.

6. Gewächshaus nach jedem der vorhergehenden Ansprüche,
**dadurch gekennzeichnet,**
- **dass** das Verbindungselement (13) Druckfestigkeit hat.

7. Gewächshaus nach jedem der Ansprüche 1 bis 5,
**dadurch gekennzeichnet,**
- **dass** das Verbindungselement (13) ein Zugbelastungselement ist.

8. Gewächshaus nach Anspruch 7,
**dadurch gekennzeichnet,**
- **dass** eine Anzahl von Verbindungselementen (13) in jedem Fall zwischen zwei aufeinander folgenden Stützen und beabstandeten Verankerungen angeordnet ist.

9. Gewächshaus nach Anspruch 8,
**dadurch gekennzeichnet,**
- **dass** die Verbindungselemente (13) im wesentlichen zueinander in einer Linie liegen.

10. Gewächshaus nach jedem der Ansprüche 7, 8 und 9,
**dadurch gekennzeichnet,**
- **dass** die Verbindungselemente (13) eine Spannung haben.

11. Gewächshaus nach jedem der vorhergehenden Ansprüche,
**dadurch gekennzeichnet,**
- **dass** das Verbindungselement (13) mit der ersten Stütze (4b) oder der zweiten Stütze (4c) verbunden ist und dass das Druckelement (16) nahe dem Punkt der Verbindung mit dem Verbindungselement (13) verbunden ist.

## Revendications

1. Serre (1) comprenant :
- deux rangées (11, 12) de colonnes (4), dans laquelle deux colonnes à la fois de chaque rangée sont raccordées à une ferme en treillis (5) s'étendant transversalement par rapport auxdites rangées (11, 12) ; et
- un toit (6) de panneaux transmettant la lumière (10), par exemple en verre, reçu dans une charpente, lequel toit (6) est supporté par lesdites colonnes (4) et lesdites fermes en treillis (5) ; dans laquelle :
- la résistance au flambage des colonnes (4) est plus faible dans la direction des rangées que transversalement à elles ;
dans laquelle :
- dans chaque rangée (11, 12), au moins un élément de raccordement (13) est agencé à un niveau intermédiaire (E) entre un certain nombre de colonnes (4) dans ladite rangée et un ancrage (14) ;
et dans laquelle ledit ancrage (14) comprend :
- une première colonne (4b) ;
- une seconde colonne (4c) ;
- au moins un élément de pression (16) sensiblement horizontal agencé à un niveau intermédiaire (E) entre la première colonne (4b) et la seconde colonne (4c) ;
- au moins un premier élément de traction (18) agencé entre la première colonne (4b), proche du point de raccordement à l'élément de pression (16), et une extrémité de la seconde colonne (4c), et
- au moins un second élément de traction (19) agencé entre la seconde colonne (4c), proche du point de raccordement à l'élément de pression (16), et une extrémité de la première colonne (4b).

2. Serre selon la revendication 1, **caractérisée en ce que** :
- au niveau de l'élément de raccordement (13), les colonnes sont dépourvues d'éléments de raccordement dans la direction transversale de la rangée.

3. Serre selon la revendication 1 ou 2, **caractérisée en ce que** :
- les colonnes (4) comprennent un bâti en treillis.

4. Serre selon la revendication 3, **caractérisée en ce que** :
- les colonnes (4) comprennent un bâti en treillis plat qui est disposé avec son plan transversalement à la rangée (11, 12).

5. Serre selon l'une quelconque des revendications précédentes, **caractérisée en ce que** :
- l'élément de raccordement (13) s'étend de manière sensiblement horizontale.

6. Serre selon l'une quelconque des revendications précédentes, **caractérisée en ce que** :
- l'élément de raccordement (13) présente une rigidité à la pression.

7. Serre selon l'une quelconque des revendications 1 à 5, **caractérisée en ce que** :
- l'élément de raccordement (13) est un élément de traction.

8. Serre selon la revendication 7, **caractérisée en ce que** :
un certain nombre d'éléments de raccordement (13) sont agencés dans chaque cas entre deux colonnes successives et des ancrages espacés.

9. Serre selon la revendication 8, **caractérisée en ce que** :
- les éléments de raccordement (13) sont alignés sensiblement mutuellement.

10. Serre selon l'une quelconque des revendications 7, 8 et 9, **caractérisée en ce que** :
- les éléments de raccordement (13) présentent une sollicitation.

11. Serre selon l'une quelconque des revendications précédentes, **caractérisée en ce que** :
- l'élément de raccordement (13) est raccordé à l'une parmi la première colonne (4b) et la seconde colonne (4c), et l'élément de pression (16) est raccordé à près du point de raccordement de l'élément de raccordement (13).
